# EUROPÄISCHE PATENTSCHRIFT

(11) **EP 2 987 993 B1**
(45) Veröffentlichungstag und Bekanntmachung des Hinweises auf die Patenterteilung: **19.09.2018**
(21) Anmeldenummer: 15175501.4
(22) Anmeldetag: 06.07.2015
(51) Int. Cl.: F02M 21/02, F02M 59/36, F02D 19/02, F16K 31/06, H01F 7/06

(54) **SYSTEM BESTEHEND AUS EINEM STEUERVENTIL MIT VON EINEM STEUERGERÄT GESTEUERTER ELEKTROMAGNETISCHER BETÄTIGUNG**
SYSTEM CONSISTING OF A CONTROL VALVE WITH ELECTROMAGTIC OPERATION CONTROLLED FROM A CONTROL DEVICE
SYSTEME COMPRENANT UNE SOUPAPE DE COMMANDE DOTEE D'UN ACTIONNEMENT ELECTROMAGNETIQUE COMMANDE PAR UN APPAREIL DE COMMANDE

(30) Priorität: 25.07.2014 DE 102014214655
(43) Veröffentlichungstag der Anmeldung: 24.02.2016
(73) Patentinhaber: ROBERT BOSCH GMBH, 70442 Stuttgart (DE)
(72) Erfinder: Weigand, Volker, 74360 Ilsfeld (DE); Simmerer, Juergen, 4492 Hofkirchen im Traunkreis (AT)

(56) Entgegenhaltungen:
- EP-A1- 1 270 930
- EP-A1- 2 647 825
- EP-A2- 1 256 709
- WO-A1-2007/091170
- WO-A2-98/04823
- DE-A1- 19 808 780
- DE-A1-102012 207 947
- US-A- 5 363 270

## Beschreibung

Die Erfindung betrifft ein System bestehend aus einem Steuerventil mit von einem Steuergerät gesteuerter elektromagnetischer Betätigung, insbesondere einem Gaseinspritzventil für eine gasbetriebene Brennkraftmaschine, aufweisend einen zumindest eine Spule und einen Anker umfassenden Elektromagneten, der mit einem eine Mediumzumessung bestimmenden Ventil zusammenwirkt, wobei eine Öffnungsbewegung des Ventils von dem Elektromagneten und eine Schließbewegung des Ventils von einer Steuerventilfeder eingestellt wird.

### Stand der Technik

Ein derartiges System ist aus der DE 199 05 721 A1 bekannt. Dieses System umfasst ein Gaseinspritzventil für eine gasbetriebene Brennkraftmaschine. Das Gaseinspritzventil besteht im Wesentlichen aus einem Elektromagneten und einem von dem Elektromagneten betätigten Ventil zur Gaszumessung. Dabei wirkt der Elektromagnet über einen Stempel mit einem Dichtelement, das seinerseits mit einem Ventilsitz zusammenwirkt, zusammen. Der Stempel umfasst ein scheibenförmiges Endteil, das sich auf dem Dichtelement im Bereich des Ventilsitzes abstützt. Weiterhin stützt sich auf dem scheibenförmigen Endteil eine Schließfeder des Gaseinspritzventils ab. Das scheibenförmige Endteil soll Verformungen des vorzugsweise losen Dichtelements verhindern.

Aus der EP 2 647 825 A1 ist ein Einlassventil einer Hochdruckpumpe für Kraftstoffeinspritzsysteme mit einem Ventilbolzen bekannt, wobei der Ventilbolzen durch das Magnetfeld einer Spule beim Öffnungs- oder Schließvorgang des Einlassventils abgebremst werden kann.

Aus der WO 98/04823 A2 ist ein Verfahren zum Steuern einer Injektornadel in einem Kraftstoffinjektor mit einer Magnetspule bekannt. Um die Aufprallgeschwindigkeit der Injektornadel während des Öffnungs- und Schließvorgangs zu steuern, wird die Magnetspule zu vorgegebenen Zeiten ein- und wieder ausgeschaltet.

Weitere Magnetventilansteuervorrichtungen sind aus DE 10 2012 207947 A1, WO 2007/091170 A1, US 5 363 270 A und DE 198 08 780 A1 bekannt. Der Erfindung liegt die Aufgabe zu Grunde, ein System bestehend aus einem Steuerventil mit von einem Steuergerät gesteuerter elektromagnetischer Betätigung bereitzustellen, bei dem der Schließvorgang verbessert ist.

### Offenbarung der Erfindung

Diese Aufgabe wird dadurch gelöst, dass das System zusätzlich ein die Schließbewegung unterstützendes elektronisches Magnetkraftabbausystem aufweist. Dieser Ausgestaltung liegt zunächst einmal die Erkenntnis zu Grunde, dass ein Abschalten bzw. Schließen des Steuerventils und damit des davon betätigten Ventils erfolgt, indem der Strom bzw. die Spannung, der bzw. die den Elektromagneten betätigt, abgeschaltet wird. Dadurch nimmt die Kraft des Elektromagneten zeitlich ab. Bei diesem Vorgang wird schließlich die Summe aus Federkraft und Gaskraft größer als die Magnetkraft und das Ventil schließt. Für bestimmte Anwendungen sind die freizugebenden Öffnungsquerschnitte relativ groß (typisch sind einige 100 mm²) und der statische Durchfluss erreicht 1000 kg/h und mehr. Deshalb muss das Ventil relativ groß dimensioniert werden (der Durchmesser von Ventilsitz und Ventilteller beträgt typisch einige cm, bis zu ca. 15 bis 20 cm). Diese Dimensionen erzeugen große druckbeaufschlagte Flächen, die gegen den herrschenden Differenzdruck (Mediumdruck zuführseitig gegen den Druck im Saugrohr) von typisch 2 bis 6 bar geöffnet werden müssen. Der Hub beträgt typisch 100 bis 300 µm und der Restluftspalt typisch 50 µm, so dass der Elektromagnet in der Lage sein muss, hohe Kräfte zu erzeugen (einige 100 Newton bis ca. 1000 Newton). Am Ende der Haltephase ist also in dem Elektromagneten eine beträchtliche elektromagnetische Energie gespeichert, die abgebaut werden muss, bevor das Ventil schließt. Die Verzögerung zwischen dem Ende der Bestromung und dem Beginn des mechanischen Schließens bzw. des Auftreffens des bewegten Ventiltellers im Ventilsitz kann deshalb einige Millisekunden betragen. Dadurch, dass erfindungsgemäß ein die Schließbewegung unterstützendes elektronisches Magnetkraftabbausystem vorgesehen ist, wird dieser Schließvorgang verkürzt. Diese Verkürzung wird auch bei Druckschwankungen in dem Medium gewährleistet, wodurch mit dem Ventil bzw. dem gesamten System eine erhöhte Dosiergenauigkeit des Mediums erreicht wird. Weiterhin bewirkt das Magnetkraftabbausystem eine Verringerung eines Ausschaltzeitverzögerung des Elektromagneten. Darüber hinaus weist das Magnetkraftabbausystem zwei von je einem Schalter gesteuerte Strompfade auf, wobei jeder Strompfad ein aktives und/oder passives Bauelement und einen Widerstand aufweist. Dabei werden die Schalter von einem programmierbaren Baustein angesteuert. Zur Energieversorgung bzw. Spannungsversorgung des programmierbaren Schalters können optional Bauelemente, zum Beispiel ein Kondensator oder Gruppen von Bauelementen vorhanden sein, die die Eigenschaft aufweisen, elektrische Energie zu Speichern und wieder abzugeben. Dadurch wird eine Pufferung erreicht.

Unabhängig von der Art des für die Ansteuerung verwendeten Steuergeräts (und insbesondere dessen Endstufe bzw. Endstufen inklusive deren Überspannungsschutz) kann durch zumindest ein aktives und/oder passives Bauelement und/oder Schaltungen ein schneller und reproduzierbarer Schließvorgang realisiert werden.

In Weiterbildung der Erfindung bewirkt das Magnetkraftabbausystem eine Verringerung einer Ausschaltzeitstreuung des Elektromagneten.

In Weiterbildung der Erfindung ist das Bauelement als passives Bauelement eine Kombination aus einem Widerstand und einem Kondensator, spannungsabhängigen Widerständen, Varistoren, Funkenstrecken, Ableitern, Überspannungsableitern, Glimmlampen, Röhren und ggf. weiteren ähnlichen Bauelementen. Von diesen elektronischen Bauelementen sind verschiedene Typen, Ausführungsformen und Varianten bekannt.

In weiterer Ausgestaltung der Erfindung ist das Bauelement als aktives Bauelement ein Halbleiterbauelement, wie eine Halbleiterdiode, Zenerdiode, Transistor und/oder ein einen Avalanche-Effekt nutzendes Element. Bei den Transistoren kommen auch Unterarten in Frage. Auch hierzu sind verschiedene Typen, Ausführungsformen und Varianten bekannt. Die zuvor genannten aktiven und passiven Bauelemente können einzeln oder in diskreten Schaltungen in ein entsprechendes System integriert sein. Ebenso können Bauelemente zu integrierten Schaltungen zusammengefasst sein.

In Weiterbildung der Erfindung ist das Magnetkraftabbausystem parallel zu der Spule geschaltet. Dadurch ist sichergestellt, dass ein schneller Spannungsabbau in der Spule nach der Beendigung der Bestromung erfolgt.

In Weiterbildung der Erfindung ist das Magnetkraftabbausystem in das Steuergerät, in eine elektrische und mechanische Schnittstelle des Steuergeräts, in eine elektrische und mechanische Schnittstelle des Steuerventils, und/oder in das Steuerventil integriert. Hierbei erfolgt eine Auswahl nach den jeweiligen örtlichen Gegebenheiten und/oder sonstigen Anforderungen.

Wenn auch das Steuerventil ein beliebiges Steuerventil, das ein beliebiges Medium steuert, sein kann, ist die bevorzugte Anwendung bei einem Gasventil, insbesondere einem Gaseinspritzventil für eine gasbetriebene Brennkraftmaschine gegeben. Bei einer solchen gasbetriebenen Brennkraftmaschine kann durch den Einsatz des erfindungsgemäß ausgestalteten Systems mit dem die Schließbewegung des Gaseinspritzventils unterstützenden elektronischen Magnetkraftabbausystems eine Verbesserung des Betriebs der Brennkraftmaschine mit einer Verringerung des Gasverbrauchs und einer Reduzierung der Abgasemissionen erreicht werden.

Weitere vorteilhafte Ausgestaltungen der Erfindung sind der Zeichnungsbeschreibung zu entnehmen, in der in den Figuren dargestellte Ausführungsbeispiele näher beschrieben sind.

Es zeigen:
Figur 1 eine Schnittdarstellung eines Steuerventils mit einer Darstellung von Einbaumöglichkeiten eines elektronischen Magnetkraftabbausystems zur Verbesserung einer Dosiergenauigkeit des Steuerventils,
Figur 2 ein Blockschema mit möglichen Anbaumöglichkeiten eines elektronischen Magnetkraftabbausystems,
Figur 3 ein Blockschaltbild einer ersten Ausführungsform eines elektronischen Magnetkraftab bausystems,
Figur 4 ein Blockschaltbild einer zweiten Ausführungsform eines elektronischen Magnetkraftab bausystems,
Figur 5 ein Zeitdiagramm der Schaltzeiten eines Magnetkraftabbausystems gemäß dem Blockschaltbild nach Figur 4 und
Figur 6 ein Diagramm mit einer Darstellung der in einem Gaseinspritzventil wirkenden Kräfte.

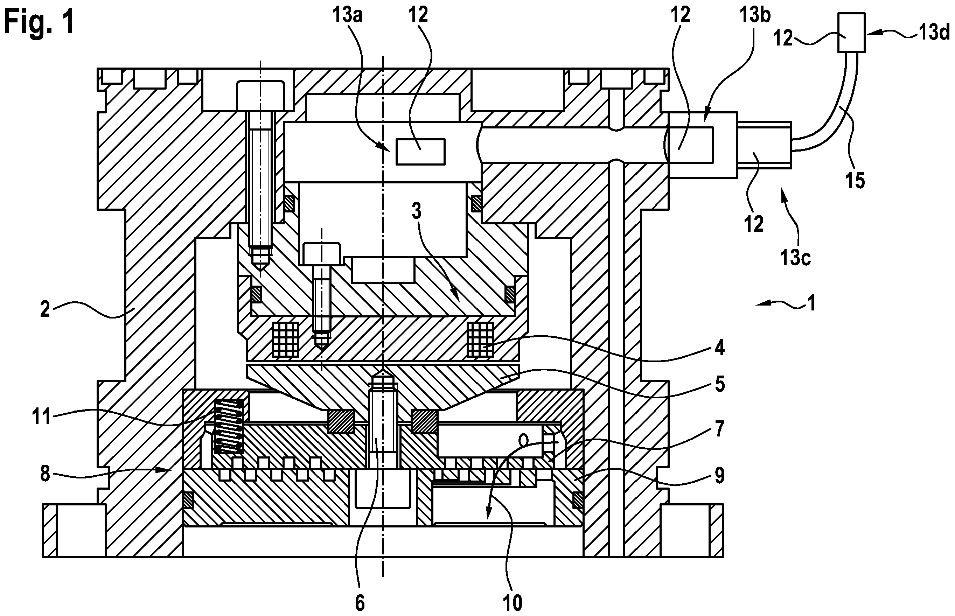

Figur 1 zeigt ein als Gaseinspritzventil ausgebildetes Steuerventil 1 zum Steuern des Durchsatzes eines gasförmigen Mediums. Das Steuerventil 1 wird insbesondere bei einer gasbetriebenen Brennkraftmaschine angewendet, wobei die Brennkraftmaschine beispielsweise ein Großmotor sein kann, der im stationären Betrieb oder instationären Betrieb eingesetzt wird. Das Steuerventil 1 weist ein Ventilgehäuse 2 auf, in dem ein Elektromagnet 3 angeordnet ist. Der Elektromagnet 3 weist zumindest eine Spule 4 auf, die bei einer Bestromung einen Anker 5 axial in dem Ventilgehäuse 2 bewegt. An dem Anker 5 ist mittels einer Ankerbolzenschraube 6 ein Ventilteller 7 eines Ventils 8 befestigt, wobei der Ventilteller 7 bei einer nicht bestromten Spule 4 auf einem Ventilsitz 9 des Ventils 8 aufsitzt. Wird die Spule 4 bestromt, wird der Ventilteller 7 von dem Ventilsitz 9 abgehoben und gibt eine Strömungsverbindung 10 durch das Ventil 8 frei. In diesem Betriebszustand strömt Gas von einem Vorratsbehälter durch das Steuerventil 1 zu der Brennkraftmaschine.

Eine Schließbewegung des Steuerventils 1 wird durch eine Abschaltung der Stromzufuhr bzw. Spannungszufuhr zu der Spule 4 eingeleitet. Dadurch wird das auf den Anker 5 einwirkende Magnetfeld abgebaut und der Ventilteller 7 kann von einer Steuerventilfeder 11 auf den Ventilsitz 9 gedrückt werden. Ein bei einem Großmotor eingesetztes Steuerventil 1 ist aufgrund der freizugebenden Öffnungsquerschnitte relativ groß ausgebildet, wobei der Ventilteller 7 einen Durchmesser von bis zu 20cm und einen Hub von bis zu 300µm aufweisen kann, um den nötigen Strömungsquerschnitt bei geöffnetem Ventil 8 freizugeben. Entsprechend muss der Elektromagnet 3 leistungsstark dimensioniert sein, um den Ventilteller 7 gegen die Kraft der Steuerventilfeder 11 und gegen die Gasdruckkräfte zur Freigabe der Strömungsverbindung 10 zu bewegen. Dementsprechend ist am Ende der Öffnungsphase in dem Elektromagneten 3 eine beträchtliche elektromagnetische Energie gespeichert, die abgebaut werden muss, bevor das Ventil 8 schließt. Die Verzögerung zwischen dem Ende der Bestromung und dem Beginn des mechanischen Schließens beziehungsweise dem Auftreffen des bewegten Ventiltellers 7 in dem Ventilsitz 9 kann daher einige Millisekunden betragen. Um diese Verzögerung zu verringern ist ein elektronisches Magnetkraftabbausystem 12 vorgesehen, das letztendlich die Magnetkräfte des Elektromagneten 3 schneller abbaut. Dieses elektronische Magnetkraftabbausystem wird in den nachfolgenden Figuren noch genauer erläutert.

In Figur 1 sind mögliche Einbaumöglichkeiten des elektronischen Magnetkraftabbausystems 12 im Bereich des Steuerventils 1 dargestellt. Das elektronische Magnetkraftabbausystem 12 kann in einer ersten Variante 13a in dem Ventilgehäuse 2 oberhalb der Spule 4 angeordnet sein. Eine zweite Variante 13b sieht vor, das elektronische Magnetkraftabbausystem 12 in einen Anschlussstecker 14 für eine Steuerleitung 15 zu integrieren oder aber auch in einer Variante 13c in einem eigenen Gehäuse zwischen der Steuerleitung 15 und dem Anschlussstecker 14 anzuordnen. Eine weitere Variante 13d sieht vor das elektronische Magnetkraftabbausystem 12 im Bereich des steuergeräteseitigen Endes der Steuerleitung 15 anzuordnen.

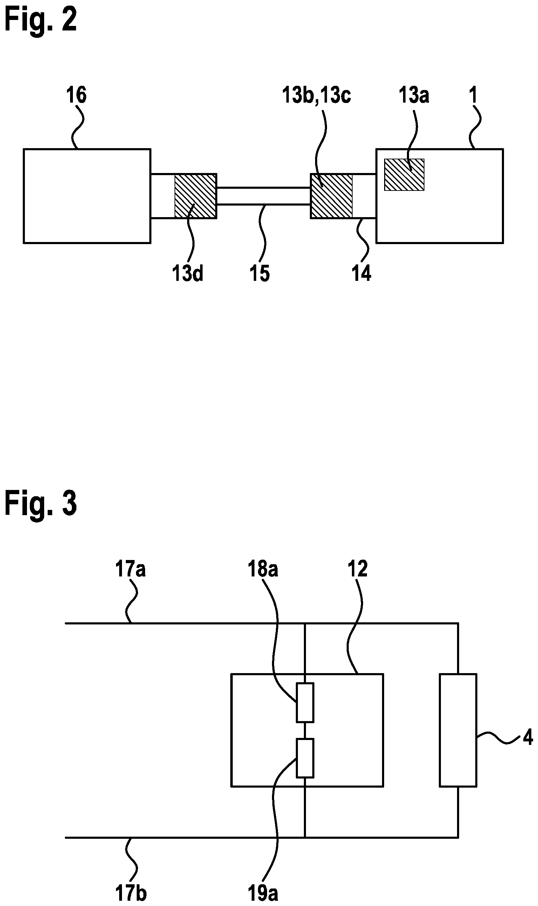

Diese möglichen Varianten 13a bis 13d sind auch in dem Blockschema gemäß Figur 2 dargestellt, wobei hier zusätzlich ein eine Endstufe aufweisendes Steuergerät 16 dargestellt ist, das über die Steuerleitung 15 mit dem Steuerventil 1 verbunden ist und das das Steuerventil 1 in der zuvor beschriebenen Art und Weise ansteuert.

Figur 3 zeigt eine erste Ausführungsform des elektronischen Magnetkraftabbausystems 12. Die Spule 4 in dem Steuerventil 1 weist elektrische Anschlüsse 17a, 17b auf, die über die Steuerleitung 15 mit dem Steuergerät 16 verbindbar sind. Parallel zu der Spule 4 ist das elektronische Magnetkraftabbausystem 12 mit den Anschlüssen 17a, 17b verschaltet. Das elektronische Magnetkraftabbausystem 12 gemäß der ersten Ausführungsform weist mindestens ein Bauelement 18a mit einem spannungsabhängigen Widerstand auf. Optional ist zusätzlich zu dem Bauelement 18a ein Widerstand 19a in Reihe geschaltet, wobei durch den Widerstand 19a eine Strombegrenzung erfolgt. Als passive Bauelemente 18a kommen in Frage: Kombinationen aus mindestens einem Widerstand und einem Kondensator, spannungsabhängige Widerstände/Varistoren/Funkenstrecken/Ableiter/Überspannungsableiter, Glimmlampen und Röhren. Als aktive Bauelemente 18a kommen insbesondere Halbleiterbauelemente in Frage, wie beispielsweise Halbleiterdioden, Zenerdioden, Transistoren mit ihren Unterarten und Bauelemente, die den Avalanche-Effekt nutzen. Diese beispielhaft genannten Bauelemente 18a können einzeln oder in diskreten Schaltungen an dem erfindungsgemäß ausgestalteten Steuerventil 1 verbaut sein. Ebenso können Bauelemente 18a zu integrierten Schaltungen zusammengefasst sein. Wie schon zuvor ausgeführt worden ist, bewirken die Bauelemente 18a (zusammen mit dem zumindest einen Widerstand 19a) einen schnelleren Spannungsabbau in der Spule 4 und demzufolge ein schnelleres Schließen des Ventils 8.

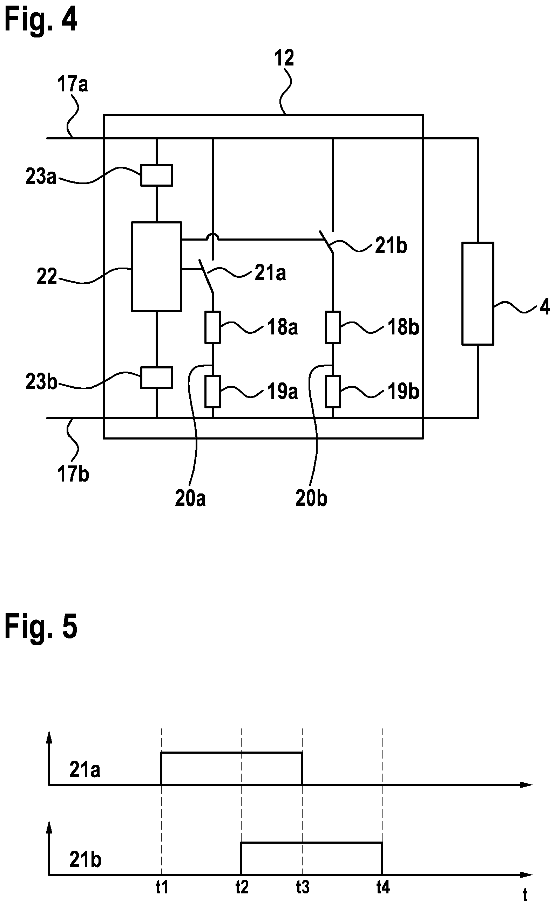

Figur 4 zeigt eine besonders vorteilhafte Schaltung des elektronischen Magnetkraftabbausystems 12. Das elektronische Magnetkraftabbausystem 12 gemäß diesem Ausführungsbeispiel weist zumindest zwei Strompfade 20a, 20b auf, wobei jeder Strompfad 20a, 20b einen Schalter 21a, 21b enthält. In jedem der beiden Strompfade 20a, 20b ist zumindest ein in Figur 3 beschriebenes Bauelement 18a, 18b und optional ein Widerstand 19a, 19b eingeschaltet. Die Schalter 21a, 21b werden von einem programmierbaren Baustein 22 angesteuert. Zur Energieversorgung bzw. Spannungsversorgung des Bausteins 22 können optional ein Element 23a, oder Gruppen von Elementen 23a, 23b vorhanden sein, die die Eigenschaft aufweisen, elektrische Energie zu speichern und wieder abzugeben. Dadurch erfolgt eine Pufferung. Ein Beispiel für ein Element 23a, 23b ist ein Kondensator. Mit dieser erfindungsgemäßen Schaltung können die Schalter 21a, 21b unabhängig voneinander betätigt werden.

In dem Zeitdiagramm gemäß Figur 5 ist dies beispielhaft dargestellt. Bei dem Zeitpunkt t1 schließt der Schalter 21a den Strompfad über das Element 18a und in dem Elektromagneten 3 gespeicherte Energie wird über diesen Strompfad 20a abgeführt. Bei dem Zeitpunkt t2 schließt auch der Schalter 21b und bei t3 öffnet wiederum der Schalter 21a. Folglich wird von t2 bis t3 Energie über beide Strompfade 20a, 20b abgeführt. Von t3 bis t4 ist nur der Schalter 21b geschlossen, und somit wird in dem Elektromagneten 3 gespeicherte Energie nur über den Strompfad 20b abgeführt.

Durch diese unabhängige Betätigung der Schalter 21a, 21b und die Auslegung der Strompfade 20a, 20b durch die jeweiligen Bauelemente 18a, 18b kann auf unterschiedliche Anforderungen aufgrund unterschiedlicher Elektromagnete 3 wesentlich flexibler reagiert werden, ohne die Schaltung an sich zu ändern. Hierbei braucht nur die Programmierung des Bausteins 22 adaptiert werden, was in Anbetracht einer möglichen Typenvielfalt von Steuerventilen 1 bei überschaubaren Stückzahlen besondere Vorteile bietet.

Bei Implementierungen von mehr als zwei Strompfaden 20a, 20b, 20n über eine entsprechende Anzahl von Schaltern 21a, 21b, 21n ist es möglich, ein sogenanntes Rate-Shaping des Stromverlaufs und damit des Magnetkraftabbaus zu realisieren. Die Schaltungen des elektronischen Magnetkraftabbausystems 12 können in mehreren Formen ausgeführt sein. Sie können frei verdrahtet, auf konventionellen ein- oder mehrlagigen Leiterplatten, einlagigen oder mehrlagigen flexiblen Leiterplatten auf Folienbasis sowie beliebigen Kombinationen hiervon ausgeführt sein. Optional können die elektronischen Magnetkraftabbausysteme 12 weitere Anordnungen aufweisen. So können zum Beispiel Kühleinrichtungen/Kühlkörper zum thermischen Management, oder Gehäuse/Umgießungen/Umspritzungen zum Schutz vor Medien und Umwelteinflüssen vorhanden sein. Stecker und andere elektrische und mechanische Stickstellen können Einrichtungen gegen unbeabsichtigtes Lösen der elektrischen Verbindungen enthalten.

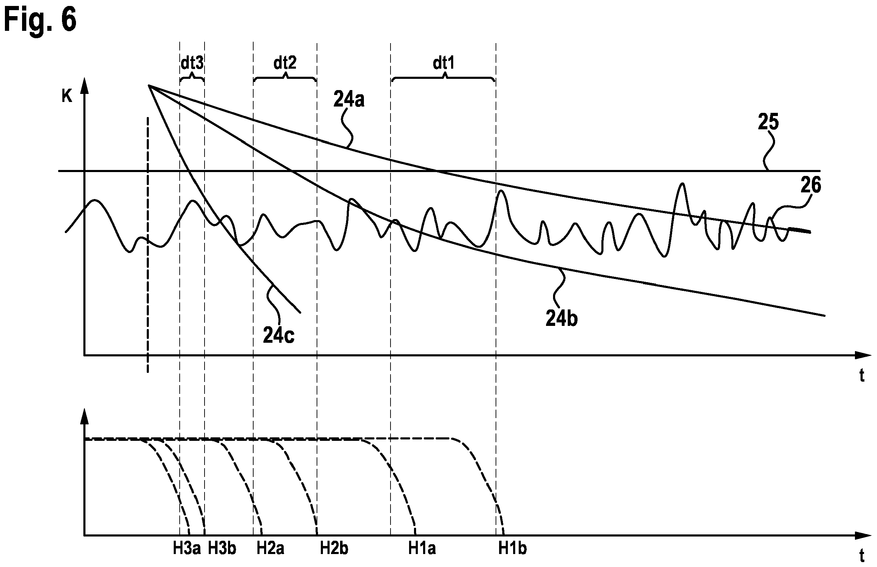

Figur 6 zeigt in Diagrammform das Abfallen der Magnetkräfte des Elektromagneten 3 für verschiedene Magnetkraftabfallkurven 24a, 24b, 24c. Dabei hängen die Magnetkraftabfallkurven 24a, 24b, 24c von den Eigenschaften und Charakteristiken des entsprechenden Elektromagneten 3 ab. Hierbei spielen Werkstoffkonstanten, geometrische Abmessungen und Dimensionen ebenso eine Rolle wie magnetische Eigenschaften. Die Magnetkräfte wirken in Richtung einer Öffnungsbewegung des Ventils 8 und somit der Schließbewegung des Ventils 8 entgegen. Der bewegliche Verband aus Anker 5 Ventilteller 7 und ggf. weiteren Bauteilen wird sich dann schließend in Bewegung setzen, wenn die Summe aus gasbedingten Kräften (in Figur 6 schematisch dargestellt durch de Gaskurve 26) und Federkräften größer ist als die zu diesem Zeitpunkt herrschende Magnetkraft (gedämpft ggf. durch vorhandene Massenträgheiten). Ursache für die gasbedingten Kräfte können Absolutdrücke und/oder Druckschwankungen vor beziehungsweise nach dem Ventil 8 sein, konkret Druckschwankungen in einem Gas-Rail oder in Gasleitungen zwischen dem Gas-Rail und erfindungsgemäßen Gaseinspritzventil, ebenso ventilausgangsseitige Absolutdrücke und Druckschwankungen.

Gemäß der Magnetkraftabfallkurve 24a werden die Magnetkräfte nur langsam abgebaut. Die Magnetkraftabfallkurve 24a schneidet die Federkraftkurve 25 in einem flachen Winkel. Der flache Schnittwinkel der Magnetkraftabfallkurve 24a der Federkraftkurve 25 hat in Verbindung mit den zufälligen Anteilen der Gaskurve 26 zur Folge, dass eine breite Streuung im Hubverlauf zwischen H1a und H1b auftritt. Diese Streuung zwischen H1a und H1b (dt1) ist Ursache für Streuungen in der zu dosierten Gasmenge. Die Gaskurve 26 definiert systematische wie auch zufällige zeitliche Schwankungen der gasbedingten Kräfte, die auf die bewegliche Ventilgruppe (5 und7) wirken. Hauptursache für die Schwankungen in den Kräften sind Druckschwankungen vor und nach dem Ventil 8.

Der Schnittwinkel der Magnetkraftabfallkurve 24b mit der Federkraftkurve 25 ist größer und demzufolge fällt die Differenz zwischen H2a und H2b (dt2) kleiner aus.

Die Magnetkraftabfallkurve 24c mit dt3 und h3a sowie h3b sind bei dem erfindungsgemäßen Steuerventil 1 durch das elektronische Magnetkraftabbausystem 12 verwirklicht. Der Schnittwinkel zwischen der Magnetkraftabfallkurve 24c und der Federkraftkurve 25 ist wesentlich steiler, dt3 ist kleiner und die aus der Differenz zwischen h3a und h3b resultierende Gasmengenstreuung ist signifikant geringer als in den beiden anderen zuvor beschriebenen Fällen der Magnetkraftabfallkurven 24a, 24b. Diese Beschleunigung des Schließens bei gleichzeitiger Reduktion der Ausfallzeitstreuung wird erzielt durch die beschriebene Integration von passiven und/oder aktiven elektronischen Magnetkraftabbausystemen 12 in das erfindungsgemäße Steuerventil 1.

## Patentansprüche

1. System bestehend aus einem Steuerventil (1) mit von einem Steuergerät (16) gesteuerter elektromagnetischer Betätigung, insbesondere einem Gaseinspritzventil für eine gasbetriebene Brennkraftmaschine, aufweisend einen zumindest eine Spule (4) und einen Anker (5) umfassenden Elektromagneten (3), der mit einem eine Mediumzumessung bestimmenden Ventil (8) zusammenwirkt, wobei eine Öffnungsbewegung des Ventils (8) von dem Elektromagneten (3) und eine Schließbewegung des Ventils (8) von einer Steuerventilfeder (11) eingestellt wird,
**dadurch gekennzeichnet, dass** das System zusätzlich eine die Schließbewegung unterstützendes elektronisches Magnetkraftabbausystem (12) aufweist, welches zumindest zwei von je einem Schalter (21a, 21b) gesteuerte Strompfade (20a, 20b) aufweist und dass jeder Strompfad (20a, 20b) ein aktives und/oder passives Bauelement (18a, 18b) und einen Widerstand (19a, 19b) aufweist, so dass das Magnetkraftabbausystem (12) eine Verringerung einer Ausschaltzeitverzögerung des Elektromagneten (3) bewirkt.

2. System nach Anspruch 1,
**dadurch gekennzeichnet, dass** das Magnetkraftabbausystem (12) eine Verringerung einer Ausschaltzeitstreuung des Elektromagneten (3) bewirkt.

3. System nach Anspruch 1 oder 2,
**dadurch gekennzeichnet, dass** das passive Bauelement (18a, 18b) eine Kombination aus einem Widerstand und Kondensatoren, spannungsabhängigen Widerständen, Varistoren, Funkenstrecken, Ableitern, Überspannungsleitern, Glimmlampen und/oder Röhren ist.

4. System nach Anspruch 1 oder 2,
**dadurch gekennzeichnet, dass** das aktive Bauelement (18a, 18b) ein Halbleiterbauelement wie eine Halbleiterdiode, eine Zenerdiode, ein Transistor und/oder ein einen Avalanche-Effekt nutzendes Element ist.

5. System nach einem der vorherigen Ansprüche,
**dadurch gekennzeichnet, dass** das Magnetkraftabbausystem (12) parallel zu der Spule (4) geschaltet ist.

6. System nach einem der vorherigen Ansprüche,
**dadurch gekennzeichnet, dass** das Magnetkraftabbausystem (12) in das Steuergerät (16), in eine elektrische und mechanische Schnittstelle des Steuergeräts (16), in eine elektrische und mechanische Schnittstelle des Steuerventils (1) und/oder in das Steuerventil (1) integriert ist.

## Claims

1. System consisting of a control valve (1) with electromagnetic actuation controlled by a control unit (16), in particular a gas injection valve for a gas-operated internal combustion engine, having an electromagnet (3) comprising at least one coil (4) and an armature (5), said electromagnet cooperating with a valve (8) that determines metering of a medium, wherein an opening movement of the valve (8) is set by the electromagnet (3) and a closing movement of the valve (8) is set by a control valve spring (11),
**characterized in that** the system additionally has an electronic magnetic force reduction system (12), which supports the closing movement and which has at least two current paths (20a, 20b) controlled by a respective switch (21a, 21b), and **in that** each current path (20a, 20b) has an active and/or passive component (18a, 18b) and a resistor (19a, 19b), such that the magnetic force reduction system (12) brings about a reduction of a switch-off time delay of the electromagnet (3).

2. System according to Claim 1,
**characterized in that** the magnetic force reduction system (12) brings about a reduction of a switch-off time variation of the electromagnet (3).

3. System according to Claim 1 or 2,
**characterized in that** the passive component (18a, 18b) is a combination of a resistor and capacitors, voltage-dependent resistors, varistors, spark gaps, arrestors, surge arrestors, glow lamps and/or tubes.

4. System according to Claim 1 or 2,
**characterized in that** the active component (18a, 18b) is a semiconductor component such as a semiconductor diode, a zener diode, a transistor and/or an element that utilizes an avalanche effect.

5. System according to any of the preceding claims, **characterized in that** the magnetic force reduction system (12) is connected in parallel with the coil (4) .

6. System according to any of the preceding claims, **characterized in that** the magnetic force reduction system (12) is integrated into the control unit (16), into an electrical and mechanical interface of the control unit (16), into an electrical and mechanical interface of the control valve (1) and/or into the control valve (1).

## Revendications

1. Système constitué d'une soupape de commande (1) munie d'un dispositif d'actionnement électromagnétique commandé par une unité de commande (16), en particulier d'une soupape d'injection de gaz destinée à un moteur à combustion interne fonctionnant au gaz, ledit système comprenant un électroaimant (3) qui est muni d'au moins une bobine (4) et d'un induit (5) et qui coopère avec une soupape (8) déterminant un dosage de milieu, le mouvement d'ouverture de la soupape (8) étant commandé par l'électroaimant (3) et le mouvement de fermeture de la soupape (8) étant commandé par un ressort de soupape de commande (11),
**caractérisé en ce que** le système comporte en outre un système électronique (12) de réduction de force magnétique qui aide le mouvement de fermeture et qui comporte au moins deux chemins de courant (20a, 20b) commandés chacun par un commutateur (21a, 21b) et **en ce que** chaque chemin de courant (20a, 20b) comporte un composant actif et/ou passif (18a, 18b) et une résistance (19a, 19b) de sorte que le système de réduction de force magnétique (12) provoque une réduction du retard de temps de désactivation de l'électroaimant (3).

2. Système selon la revendication 1,
**caractérisé en ce que** le système de réduction de force magnétique (12) provoque une réduction de la dispersion de temps de désactivation de l'électroaimant (3).

3. Système selon la revendication 1 ou 2,
**caractérisé en ce que** le composant passif (18a, 18b) est une combinaison d'une résistance et de condensateurs, de résistances dépendant de la tension, de varistances, d'éclateurs, de parafoudres, de conducteurs de surtension, de lampes à incandescence et/ou de tubes.

4. Système selon la revendication 1 ou 2,
**caractérisé en ce que** le composant actif (18a, 18b) est un composant à semi-conducteur tel qu'une diode à semi-conducteur, une diode Zener, un transistor et/ou un élément utilisant un effet d'avalanche.

5. Système selon l'une des revendications précédentes,
**caractérisé en ce que** le système de réduction de force magnétique (12) est monté en parallèle avec la bobine (4) .

6. Système selon l'une des revendications précédentes,
**caractérisé en ce que** le système de réduction de force magnétique (12) est intégré dans l'unité de commande (16), dans une interface électrique et mécanique de l'unité de commande (16), dans une interface électrique et mécanique de la soupape de commande (1) et/ou dans la soupape de commande (1).
